# EUROPEAN PATENT SPECIFICATION

(11) **EP 3 822 931 B1**
(45) Date of publication and mention of the grant of the patent: **27.12.2023**
(21) Application number: 19208632.0
(22) Date of filing: 12.11.2019
(51) Int. Cl.: G08B 5/36, G01C 21/36

(54) **A VEHICLE ALERT SYSTEM FOR NOTIFYING A POTENTIALLY DANGEROUS DRIVING SITUATION TO A DRIVER**
FAHRZEUGALARMSYSTEM ZUM MELDEN EINER POTENZIELL GEFÄHRLICHEN FAHRSITUATION AN EINEN FAHRER
SYSTÈME D'ALERTE DE VÉHICULE DE NOTIFICATION D'UNE SITUATION DE CONDUITE POTENTIELLEMENT DANGEREUSE À UN CONDUCTEUR

(43) Date of publication of application: 19.05.2021
(73) Proprietor: Aptiv Technologies Limited, St. Michael (BB)
(72) Inventor: RATHSACK, Kai, 31162 Bad Salzdetfurth (DE); HEIM, Andreas, 72138 Kirchentellinsfurt (DE)
(74) Representative: Vigand, Philippe

(56) References cited:
- EP-A1- 2 893 867
- EP-A1- 3 040 809
- JP-A- 2019 040 354
- JP-B1- 6 587 776
- US-A1- 2018 268 701

## Description

### TECHNICAL FIELD

The present disclosure relates to the field of vehicle alert systems for notifying a potentially dangerous driving situation outside the vehicle to a vehicle driver.

### BACKGROUND

There are different kinds of existing systems for helping a vehicle operator, or driver, become aware of a potentially dangerous situation outside of the vehicle which he or she might have missed and not handled.

An existing system is a side view assistance system that helps the vehicle driver to avoid visual blind spots, i.e. areas the vehicle driver cannot see due to physical limitations of the vehicles. Such a side view assistance system can show a video stream, captured by an outside camera, on a display inside the car, for example a center stack display or a dedicated display that directly overlays a physical element of the car, e.g. a A-pillar, and shows what is behind this physical element. Alternatively, the side view assistance system uses an information provided by an outside camera to detect if there is another vehicle in the optical blind spot of a side mirror of the vehicle. When another vehicle is detected, the assistance system issues a alert signal, which is useful when the driver has intention of changing lanes.

Other existing systems, ADAS (Advanced driver-assistance systems), use sensors like cameras, LIDAR or radar to detect and classify an object, such as a pedestrian, a bicycle or another vehicle, and determine a risk of a collision of the vehicle with that object. The ADAS may take over control of the vehicle, for example by decelerating up to an emergency brake.

Document US6859144B2 discloses a vehicle situation alert system and deals with the problem of generating alert signals when the driver does not need or want to be warned, for example because he or she has no intention of changing lane or is already aware of a potentially dangerous vehicle situation that is currently happening. Such generated alert signals may be useless and annoying. This document US6859144B2 discloses a system comprising an external detector that detects objects in an adjacent lane, an eye gaze direction detection apparatus that detects a lane change intention of the driver (for example when the driver eye gaze direction is toward driver side rear view mirror) or a lack of intention of changing lane (for example when the driver eye gaze direction is directly forward), a control unit that receives the output signals from the external detector and the eye gaze direction detection apparatus as inputs and determines whether or not to activate an alert signal generator to generate a visual alert signal. US6859144B2 also describes a situation where the driver is not focused on a danger spot. This information is detected and then used to determine whether or not it is needed to generate an alert signal. JP 2019 040354 A also describes a system for alerting a driver potentially not focused on a danger spot.

In a situation wherein the driver is not focused on a danger spot because he or she may be distracted for example by an In-Vehicle Infotainment system, the driver may miss the visual alert signal or be delayed looking at it.

The present disclosure improves the situation.

### SUMMARY

The present disclosure concerns a vehicle alert system as defined in claim 1.

Thus, the driver gets a warning on a detected potentially dangerous driving situation on an appropriate display, determined according to the eye gaze direction of the driver.

The selected display can be located in the vehicle driver's eye gaze direction or, if there is no display in the vehicle driver's eye gaze direction, the selected display is located the nearest to the vehicle driver's eye gaze direction. In this way, the driver gets the warning by a simple look on the display that is the most appropriate in consideration of the driver's eye gaze direction.

Advantageously, the visual alert signal includes at least one of the following elements:
- a visual indication, for example an arrow, showing a direction indicating where the detected potentially dangerous driving situation is located; and
- a schematic image representing a detected object.

Advantageously, the alert unit selects a succession of displays, depending on a movement of the eye gaze direction of the vehicle driver, and controls display of the visual alert signal successively on the succession of selected displays.

In this way, the driver's look is guided towards the scene outside the vehicle corresponding to the detected potentially dangerous driving situation.

The alert unit determines an awareness status of the vehicle driver, said awareness status indicating whether or not the vehicle driver is aware of the detected potentially dangerous driving situation, for example by comparing a location information related to the potentially dangerous driving situation with the information related to an eye gaze direction of the vehicle driver.

Advantageously, the alert unit determines whether or not a visual alert signal has to be generated, depending on a criticality level of the detected potentially dangerous driving situation. The criticality level represents how potentially dangerous is the detected driving situation. For example, when the criticality level is low, the alert unit may not generate the visual alert signal in order to avoid annoying the driver.

The criticality level of the detected potentially dangerous driving situation is for example included in the detection information provided by the at least one external detector.

Alternatively, the criticality level of the detected potentially dangerous driving situation is determined by the alert unit from the detection information provided by the at least one external detector.

The present disclosure also concerns a method for notifying a potentially dangerous driving situation to a vehicle driver as defined in claim 10.

The present disclosure also concerns:
- a non-transitory computer readable medium comprising program instructions for causing a computer to execute the steps of the method defined above; and
- a vehicle integrating the vehicle alert system previously described.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 represents schematically a vehicle having a vehicle alert system, according to an exemplary embodiment;
Figure 2 represents schematically an alert unit of the vehicle alert system of figure 1;
Figure 3 represents the vehicle of figure 1 with visual alert signals;
Figure 4 is a flow chart of a method for notifying a potentially dangerous driving situation to a vehicle driver, according to an exemplary embodiment.

### DETAILED DESCRIPTION

Note: only the third and fourth exemplary embodiments and the corresponding method, as disclosed below, fall under the scope of the claims. The first and second exemplary embodiments, as disclosed below, do not fall under th scope of the claims but are useful to understand the invention.

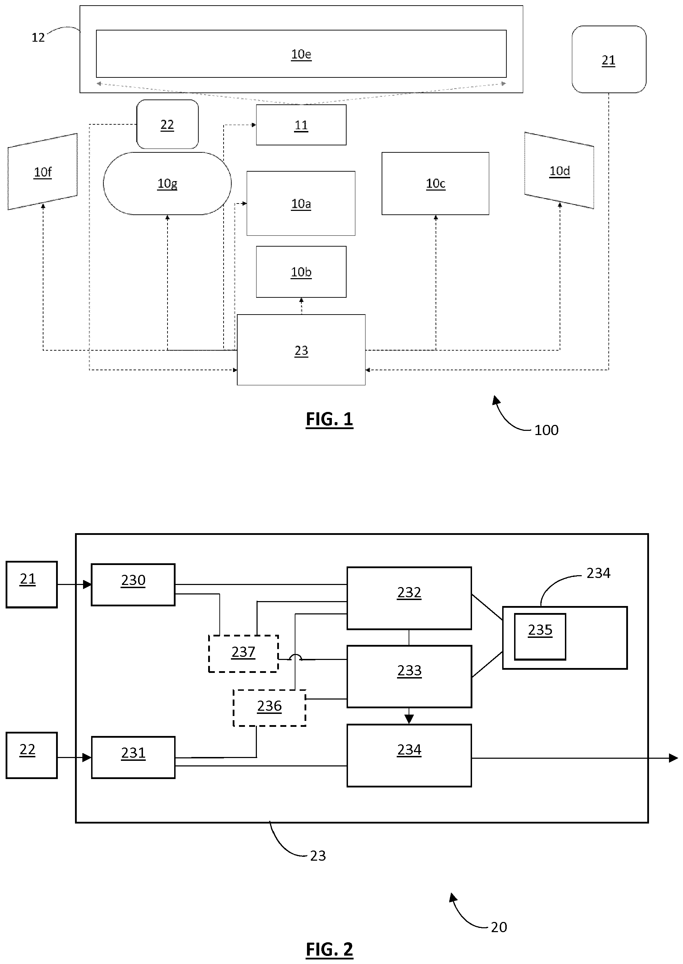

Figure 1 shows schematically a vehicle 100 incorporating a plurality of displays 10a to 10g and a vehicle alert system 20 for notifying a potentially dangerous driving situation to a driver of the vehicle 100.

The displays of the vehicle include for example: a center infotainment display 10a, a right-side mirror 10d, a left-side mirror 10f, one or more passenger displays 10c, an auxiliary display 10b, a virtual HUD (Head-Up Display) 10e, using the wind shield to project an image from a HUD projector 11, a cluster display 10g.

The vehicle alert system 20 has at least one detector 21 for providing a detection information related to a potentially dangerous driving situation, an eye gaze direction detection unit 22 for providing a driver eye gaze direction information, and an alert unit 23.

In a first exemplary embodiment, the vehicle alert system 20 has a plurality of detectors 21 that provide a detection information related to a driving situation in an external environment around the vehicle 100, that may be potentially dangerous, as an output information. The detectors 21 are for example camera systems capturing images or videos outside the vehicle 100. The detection information output by the detectors 21 can comprise images or videos captured by the camera systems and/or a pre-processed information (that is information already processed by the camera systems from the captured images or videos). The pre-processed information can include any appropriate indication related to the detected object, such as the nature of the detected object (e.g. a person, adult or child, an animal, another vehicle, etc.), the location and moving direction of the detected object. The detectors 21 can be detectors of other systems of the vehicle, for example ADAS detectors.

The driver eye gaze direction detection unit 22 provides a driver eye gaze direction information, as an output information. The driver eye gaze direction information is an information that indicates the eye gaze direction of the vehicle driver. The driver eye gaze direction detection unit 22 has a driver camera system that captures images of the driver's eyes and an analyzer that analyses the captured image and determines an eye gaze direction of the driver from these captured images.

With reference to figure 2, the alert unit 23 has a first receiver 230 that receives the detection information transmitted by the detectors 21, and a second receiver 231 that receives the driver eye gaze direction information transmitted by the driver eye gaze direction detection unit 22. The alert unit 23 has a first determiner 232 that determines whether a potentially dangerous driving situation is detected, on the basis of the detection information. The classification of a detected driving situation as a potentially dangerous driving situation may be achieved by the detectors themselves. In that case, the detection information received by the first receiver 230 indicates that the detected driving situation is potentially dangerous and the determiner reads out this indication in the received detection information. Some detectors 21, in particular ADAS detectors, have processing resources that are capable of analyzing the captured images and determining whether a detected driving situation is potentially dangerous or not. Alternatively, or in addition, the determiner 232 determines whether a detected driving situation is potentially dangerous on the basis of the received detection information. A driving situation is considered as potentially dangerous if it may result in an accident if the driver would continue his drive with given and predicted speed and trajectory not be becoming aware of the situation.

The alert unit 23 has also a visual alert signal generator 233 and a display controller 234. When a potentially dangerous driving situation is detected, the generator 233 generates a visual alert signal 30 and the display controller 234 controls display of the visual alert signal 30 on a display of the vehicle 100. More precisely, the display controller 234 has a display selector 235 that selects one of the plurality of displays 10a-10h of the vehicle 100, depending on the driver eye gaze direction information received by the second receiver 231, and then the display controller 234 controls display of the visual alert signal 30 on the selected display. In order to select the most appropriate display to warn the driver of the potentially dangerous driving situation, the display selector 235 determines first whether or not there is a vehicle display located in the vehicle driver's eye gaze direction. If so, the display selector 235 selects this vehicle display located in the vehicle driver's eye gaze direction and the display controller 234 controls display of the visual alert signal 30 on this selected display. If not, that is if there is no display in the vehicle driver's eye gaze direction, the display selector 23 proceeds with selecting, among the plurality of vehicle displays 10a-10h, the one that is located closest to the vehicle driver's eye gaze direction, and the display controller 234 controls display of the generated visual alert signal 30 on the selected display.

The visual alert signal 30 generated by the generator 233 can contain at least one of the following elements:
- a visual indicator showing a direction and indicating where the detected potentially dangerous driving situation is located, for example an arrow showing a direction and pointing the driver's look to the detected potentially dangerous driving situation;
- a schematic picture representing the detected object, for example a schematic picture of a person if a person has been detected.

For example, we assume that the driver is currently looking at a center infotainment display 10a of the vehicle and, at the same time, a child is walking on the right sidewalk towards a pedestrian crossing located on the road in front of the vehicle 100. The alert unit 23 detects that the driving situation is potentially dangerous, generates a visual alert signal 30, selects the center infotainment display 10a of the vehicle 100 and controls display of the visual alert signal 30 on the selected display. The visual alert signal 30 contains a schematic picture of a person and an arrow pointing in the direction of the detected potentially dangerous situation.

A second exemplary embodiment is based on the first exemplary embodiment and only differs by the features described below. The same references are given to the same or corresponding elements.

In the second exemplary embodiment, the display selector 235 of the alert unit 23 selects a succession of n displays (with n>1), depending on a movement of the eye gaze direction of the vehicle driver, and the display controller 234 controls display of a succession of n visual alert signals successively on the selected displays. The visual alert signals successively displayed on the different selected displays, follow the movement of the driver eye gaze direction. Each of the successive displays are selected as previously described in connection with the first exemplary embodiment.

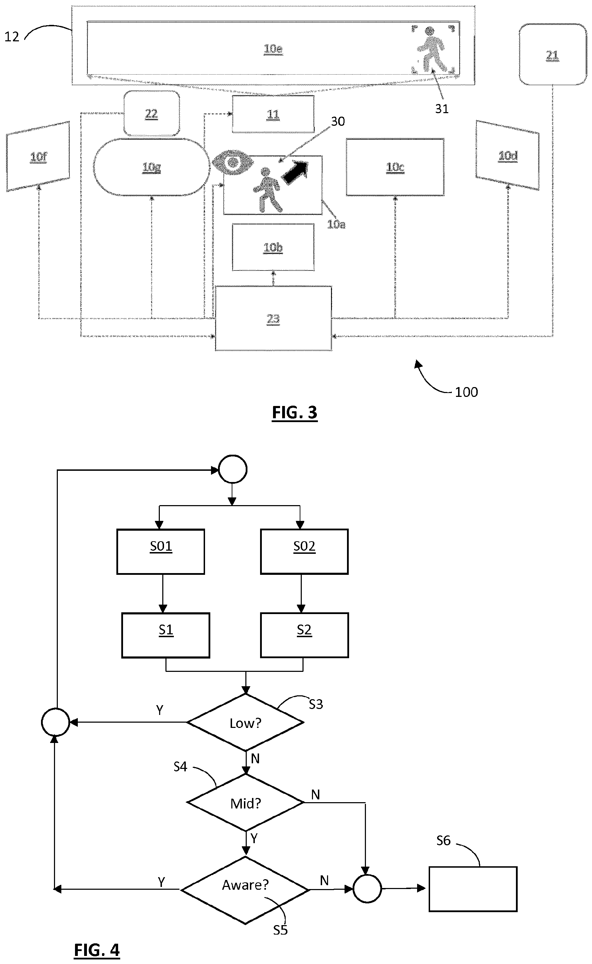

Figure 3 shows schematically the vehicle alert system of figure 1 when a pedestrian located outside the car at a position represented by a pedestrian icon 31 between brackets. More precisely, the pedestrian icon represents the position of a real pedestrian as seen through the wind shield from the driver's position. An eye-symbol (partially overlapping the display 10a in figure 3) is represented only to indicate the display on which the driver is currently focused. Upon detection of the pedestrian by the vehicle alert system, a visual alert signal 30, including for example an arrow pointing the driver's look to the detected pedestrian and a schematic picture representing the pedestrian, is displayed on the display 10a. Consequently, the driver looks up to right part of wind shield and looks at the pedestrian.

Alternatively, if the driver does not follow the direction indicated by the arrow displayed on the display 10a but looks up to the left part of the wind shield, the visual alert signal 30 can follow to that position, be displayed on the left part of the wind shield used as a virtual HUD and point to the right in direction of the pedestrian.

When the driver looks at the detected pedestrian, the warning is dismissed.

Alternatively, the eye-symbol or any other visual warning symbol could be displayed on the display on which the driver is currently focused, in order to reinforce the warning.

A third exemplary embodiment is based on any of the first and second exemplary embodiments and only differs by the features described below. The same references are given to the same or corresponding elements.

In the third exemplary embodiment, the alert unit 23 has a second determiner that is a driver awareness status determiner 236 that determines an awareness status of the vehicle driver, indicating whether or not the vehicle driver is aware of the detected potentially dangerous driving situation, and then the generator 233 determines whether or not a visual alert signal 30 has to be generated, depending on the awareness status of the vehicle driver.

For example, if the determiner 236 determines that the vehicle driver is aware of the detected potentially dangerous driving situation, no visual alert signal is generated by the generator 233. But, if the determiner 236 determines that the vehicle driver is not or might not be aware of the detected potentially dangerous driving situation, a visual alert signal 30 is generated by the generator 233 and displayed as previously described in the first exemplary embodiment. Determining the awareness status of the driver allows to avoid displaying a visual alert signal when the driver is already aware of the potentially dangerous driving situation, which would be annoying for the driver. In this way, the visual alert signal 30 is generated and then displayed only when this is appropriate, that is when it is highly probable that the driver is not aware of the danger.

The determiner 236 determines the awareness status of the driver by comparing a location information related to the potentially dangerous driving situation (here provided by the first determiner 232) with the information related to an eye gaze direction of the vehicle driver (provided by the second receiver 231). For example, if the outcome of the comparison indicates that the potentially dangerous driving situation is located in the driver visual field, that is determined on the basis of the driver eye gaze direction, the determiner 236 determines that the driver is aware of the potentially dangerous driving situation and consequently the generator 233 does not necessarily have to generate a visual alert signal. If the outcome of the comparison indicates that the potentially dangerous driving situation is located out of the driver visual field, the alert unit 23 determines that the driver is not aware of the potentially dangerous driving situation and therefore the generator 233 generates a visual alert signal 30 and the controller 234 controls display of it on a selected display of the vehicle, as previously described.

A fourth exemplary embodiment is based on the third exemplary embodiment and only differs by the features described below. The same references are given to the same or corresponding elements.

In the fourth exemplary embodiment, the alert unit 23 has a third determiner that is a criticality level determiner 237 that determines whether or not a visual alert signal 30 has to be generated, depending on a criticality level of the detected potentially dangerous driving situation. The assignment of a criticality level to the detected potentially dangerous driving situations allows to put them in order of importance (or in order of criticality). Then, the alert unit 23 may determine that only the potentially dangerous driving situations having a predetermined criticality level are notified to the driver by way of a generated visual alert signal displayed on a selected display of the vehicle.

For example, three levels of criticality are defined: high, mid and low. A high level of criticality means that the driving situation is considered as very dangerous, whereas a low level of criticality means that the driving situation is considered as not very dangerous. The criticality level can be determined depending on one or more parameters such as the type of the detected object, the trajectory and speed of the vehicle, the trajectory and speed of the detected object, etc. The criticality level can be determined with reference to a database that stores a criticality level information in connection to different parameters. Concerning the type of the detected object, for example a child at the side of the road might have a higher weighting than an adult as there is a higher risk that a child might run onto the road unexpectedly. The criticality level is evaluated on the basis of first parameters related to the object(s) detected by the external detectors (type, position, speed, trajectory, etc.) and second parameters related to the vehicle (position, speed, trajectory, etc.). It can be represented by a value on a predefined scale from a minimal value, corresponding to the lowest criticality level, to a maximal value, corresponding to the highest criticality level. Two different intermediate thresholds are defined on this scale, in order to classify the potentially dangerous driving situations into the three categories of criticality level: low, mid and high.

The criticality level of the detected potentially dangerous driving situation is determined by the third determiner 237 from the detection information provided by the at least one external detector.

Alternatively, or additionally, the criticality level of the detected potentially dangerous driving situation is included in the detection information provided by the external detector(s).

When a potentially dangerous driving situation is detected, the generator 233 generates, or does not generate, a visual alert signal 30, depending on the criticality level assigned to the potentially dangerous driving situation. For example:
- when the criticality level of a potentially dangerous situation is low, the generator 233 does not generate any visual alert signal;
- when the criticality level of a potentially dangerous situation is mid, the generator 233 generates a visual alert signal either systematically or only if, in addition, it is determined that the driver is not aware of the potentially dangerous driving situation;
- when the criticality level of a potentially dangerous situation is high, the alert unit 23 decides to generate systematically a visual alert signal (whatever the awareness status of the driver, that is even if the driver is considered as aware of the potentially dangerous driving situation).

Taking into account the criticality level allows to avoid generating and then displaying a visual alert signal 30 when it is not necessary, which would the effect of annoying the driver.

For example, when a detected object is a child who is walking or running, the criticality level is high and consequently a visual alert signal 30 is systematically generated and then displayed. In particular, even if it is highly probable that the driver is aware of the detected potentially dangerous situation, the visual alert signal 30 is generated and displayed. On the contrary, if the detected object is a person that stays still and is out of the vehicle trajectory, the criticality level is low and the generator 233 does not generate any visual alert signal.

Figure 4 shows a flow chart of a method for notifying a potentially dangerous driving situation to a driver, according to an exemplary embodiment. The method is performed by the vehicle 100 having the alert unit 23 that has a driver awareness status determiner 236 and a criticality level determiner 237, according the third and fourth embodiments.

The method comprises a first reception step S01, wherein the first receiver 230 receives the detection information from the external detectors 21 of the vehicle 100, and a second reception step S02, wherein the second receiver 231 receives the driver eye gaze direction information from the eye gaze direction detection unit 22.

In a detection step S1, the determiner 232 detects that a detected driving situation is potentially dangerous from the detection information received by the first receiver 230.

In a step S2 of assignment of an awareness status, the determiner 236 determines an awareness status of the vehicle driver, that is whether or not the vehicle driver is aware of the detected potentially dangerous driving situation, by using the driver eye gaze direction information received by the second receiver 231. For example, if the detected potentially dangerous driving situation is located in the visual field of the driver, the driver is considered as aware of the detected potentially dangerous driving situation. If not, the driver is considered as unaware of the detected potentially dangerous driving situation.

In a step S3, the determiner 237 determines whether or not the criticality level of the detected potentially dangerous driving situation is low. If the criticality level is low, the process goes back to steps S01, S02. If the criticality level is not low, the process goes to a step S4.

In the step S4, the determiner 237 determines whether or not the criticality level of the detected potentially dangerous driving situation is mid. If the criticality level is mid, the process goes to a step S5 of checking the awareness status of the vehicle driver. If the criticality level is not mid, the process goes to a step S6 of issuing a warning.

In step S5, the determiner 236 determines whether or not the vehicle driver is aware of the potentially dangerous situation. If the driver is considered as aware of the detected potentially dangerous driving situation, the process goes back to steps S01, S02 and no visual alert signal is generated. If the driver is considered as unaware of the detected potentially dangerous driving situation, the process goes to step S6 of issuing a warning.

The steps S3 and S4 are optional and may not be performed.

In the step S6 of issuing a warning, the generator 233 generates a visual alert signal 30, as previously described. In addition, the selector 235 selects the most appropriate display of the vehicle displays, by using the detected driver eye gaze direction information received by the second receiver 231, as previously described. Then, the display controller 234 displays the generated visual alert signal 30 on the selected display.

Thus, when the criticality level of the detected potentially dangerous driving situation is low, no action is taken. When the criticality level of the detected potentially dangerous driving situation is mid, a warning is issued only if the driver is not aware thereof. When the criticality level of the detected potentially dangerous driving situation is high, a warning is always issued and in addition an active car control, like braking, might be activated.

According to the invention, any detected potentially dangerous driving situation is assigned a status of driver awareness that remains valid for a given time period (configurable). Once a detected potentially dangerous situation is assigned a status like "driver aware" corresponding to the situation where the driver is aware of the detected potentially dangerous situation, it will keep this status during the given time period. A detected potentially dangerous situation which the driver has become aware of a short time ago (within the given time period) will not cause warning any more, even if the driver does not currently look in the direction of the detected potentially dangerous situation. A warning might be issued once the criticality level changes or the awareness status changes (due to timeout, after expiration of the given time period).

The present disclosure also concerns a non-transitory computer readable medium comprising program instructions for causing a computer to execute the steps of the method previously described. The program instructions are stored in a storage module related to the vehicle, such as volatile memory, e.g., ROM, RAM, etc., and/or non-volatile memory, e.g., Flash, NAND, etc., that is permanently or removably integrated in the vehicle or connectable to the vehicle, e.g., via the 'cloud', and can be executed by a computer, or a calculator, of the vehicle, such as one or more modules of electronic control units (ECUs).

## Claims

1. A vehicle alert system for notifying a potentially dangerous driving situation to a driver, comprising at least one external detector (21) that is adapted to provide a detection information related to a potentially dangerous driving situation outside the vehicle (100), an eye gaze direction detector (22) that is adapted to provide a driver eye gaze direction information, an alert unit (23) that is adapted to receive the detection information and the driver eye gaze direction information, generate a visual alert signal (30), when a potentially dangerous driving situation is detected, and control display of the visual alert signal (30) on a display of the vehicle, wherein the vehicle (100) comprises a plurality of displays (10a-10g), the alert unit (23) is adapted to select one of said plurality of displays of the vehicle, depending on the driver eye gaze direction information, and control display of the visual alert signal (30) on the selected display, and the alert unit (23, 236) is adapted to determine an awareness status of the vehicle driver, said awareness status indicating whether or not the vehicle driver is aware of the detected potentially dangerous driving situation, and then determine whether or not a visual alert signal has to be generated depending on the awareness status of the vehicle driver, and, after determining that the driver is aware of the detected potentially dangerous driving situation, the awareness status, being aware, of the driver remains valid for a given period of time.

2. The vehicle alert system according to claim 1, wherein the selected display (10a) is located in the vehicle driver's eye gaze direction.

3. The vehicle alert system according to claim 2, wherein, if there is no display in the vehicle driver's eye gaze direction, the selected display is located the nearest to the vehicle driver's eye gaze direction.

4. The vehicle alert system according to any of claims 1 to 3, wherein the visual alert signal includes a visual indication showing a direction indicating where the detected potentially dangerous driving situation is located.

5. The vehicle alert system according to any of claims 1 to 4, wherein the visual alert signal includes an arrow showing a direction indicating where the detected potentially dangerous driving situation is located.

6. The vehicle alert system according to any of claims 1 to 5, wherein the alert unit (23) is adapted to select a succession of displays, depending on a movement of the eye gaze direction of the vehicle driver, and control display of the visual alert signal successively on the succession of selected displays.

7. The vehicle alert system according to any of claims 1 to 6, wherein the alert unit (23, 237) is adapted to determine whether or not a visual alert signal has to be generated, depending on a criticality level of the detected potentially dangerous driving situation.

8. The vehicle alert system according to claim 7, wherein the criticality level of the detected potentially dangerous driving situation is included in the detection information provided by the at least one external detector (21).

9. The vehicle alert system according to claim 7, wherein the criticality level of the detected potentially dangerous driving situation is determined by the alert unit (23) from the detection information provided by the at least one external detector (21).

10. A method for notifying a potentially dangerous driving situation to a vehicle driver, wherein the vehicle comprises a plurality of displays, the method comprising the steps of :
- receiving (S01) a detection information related to a potentially dangerous driving situation, from at least one external detector (21),
- receiving (S02) a driver eye gaze direction information, from an eye gaze direction detector (22),
- generating a visual alert signal, when a potentially dangerous driving situation is detected,
- selecting one of said plurality of displays of the vehicle, depending on the driver eye gaze direction information, and
- controlling display of the visual alert signal on the selected display of the vehicle,
wherein the method further comprises the step of determining an awareness status of the vehicle driver, said awareness status indicating whether or not the vehicle driver is aware of the detected potentially dangerous driving situation, and then determining whether or not a visual alert signal has to be generated depending on the awareness status of the vehicle driver, and, after determining that the driver is aware of the detected potentially dangerous driving situation, the awareness status, being aware, of the driver remains valid for a given period of time.

11. A non-transitory computer readable medium comprising program instructions for causing a computer to execute the steps of the method defined in claim 10.

12. A vehicle integrating the vehicle alert system according to any of claims 1 to 9.

## Patentansprüche

1. Fahrzeugwarnsystem zum Benachrichtigen eines Fahrers über eine potenziell gefährliche Fahrsituation, das mindestens einen externen Detektor (21), der angepasst ist, Detektionsinformationen bereitzustellen, die eine potenziell gefährliche Fahrsituation außerhalb des Fahrzeugs (100) betreffen, einen Blickrichtungsdetektor (22), der angepasst ist, Blickrichtungsinformationen eines Fahrers bereitzustellen, eine Warneinheit (23) umfasst, die angepasst ist, die Detektionsinformationen und die Blickrichtungsinformationen eines Fahrers zu empfangen, ein visuelles Warnsignal (30) zu erzeugen, wenn eine potenziell gefährliche Fahrsituation detektiert wird, und eine Anzeige des visuellen Warnsignals (30) auf einem Display des Fahrzeugs zu steuern, wobei das Fahrzeug (100) eine Vielzahl von Displays (10a-10g) umfasst, die Warneinheit (23) angepasst ist, in Abhängigkeit von den Blickrichtungsinformationen des Fahrers eine der Vielzahl von Displays des Fahrzeugs auszuwählen und eine Anzeige des visuellen Warnsignals (30) auf dem ausgewählten Display zu steuern, und die Warneinheit (23, 236) angepasst ist, einen Aufmerksamkeitsstatus des Fahrzeugfahrers zu bestimmen, wobei der Aufmerksamkeitsstatus anzeigt, ob sich der Fahrzeugfahrer der detektierten potenziell gefährlichen Fahrsituation bewusst ist oder nicht, und dann in Abhängigkeit vom Aufmerksamkeitsstatus des Fahrzeugfahrens zu bestimmen, ob ein visuelles Warnsignal zu erzeugen ist oder nicht, nachdem bestimmt wurde, dass sich der Fahrer der detektierten potenziell gefährlichen Fahrsituation bewusst ist, wobei der Aufmerksamkeitsstatus - das Bewusstsein - des Fahrers für eine gegebene Zeitperiode gültig bleibt.

2. Fahrzeugwarnsystem nach Anspruch 1, wobei sich das ausgewählte Display (10a) in der Blickrichtung des Fahrzeugfahrers befindet.

3. Fahrzeugwarnsystem nach Anspruch 2, wobei sich, wenn sich in der Blickrichtung des Fahrzeugfahrers kein Display befindet, das ausgewählte Display an einer der Blickrichtung des Fahrzeugfahrers am nächsten liegenden Stelle befindet.

4. Fahrzeugwarnsystem nach einem der Ansprüche 1 bis 3, wobei das visuelle Warnsignal eine visuelle Anzeige beinhaltet, die eine Richtung zeigt, die anzeigt, wo sich die detektierte potenziell gefährliche Fahrsituation befindet.

5. Fahrzeugwarnsystem nach einem der Ansprüche 1 bis 4, wobei das visuelle Warnsignal einen Pfeil beinhaltet, der eine Richtung zeigt, die anzeigt, wo sich die detektierte potenziell gefährliche Fahrsituation befindet.

6. Fahrzeugwarnsystem nach einem der Ansprüche 1 bis 5, wobei die Warneinheit (23) angepasst ist, in Abhängigkeit von einer Bewegung der Blickrichtung des Fahrzeugfahrers eine Folge von Displays auszuwählen und die Anzeige des visuellen Warnsignals nacheinander auf der Folge von ausgewählten Displays zu steuern.

7. Fahrzeugwarnsystem nach einem der Ansprüche 1 bis 6, wobei die Warneinheit (23, 237) angepasst ist, in Abhängigkeit von einer Dringlichkeitsstufe der detektierten potenziell gefährlichen Fahrsituation zu bestimmen, ob ein visuelles Warnsignal zu erzeugen ist oder nicht.

8. Fahrzeugwarnsystem nach Anspruch 7, wobei die Dringlichkeitsstufe der detektierten potenziell gefährlichen Fahrsituation in den von dem mindestens einen externen Detektor (21) bereitgestellten Detektionsinformationen beinhaltet ist.

9. Fahrzeugwarnsystem nach Anspruch 7, wobei die Dringlichkeitsstufe der detektierten potenziell gefährlichen Fahrsituation von der Warneinheit (23) anhand der von dem mindestens einen externen Detektor (21) bereitgestellten Detektionsinformationen bestimmt wird.

10. Verfahren zum Benachrichtigen eines Fahrzeugfahrers über eine potenziell gefährliche Fahrsituation, wobei das Fahrzeug eine Vielzahl von Displays umfasst, wobei das Verfahren die folgenden Schritte umfasst:
- Empfangen (S01) von Detektionsinformationen, die eine potenziell gefährliche Fahrsituation betreffen, von mindestens einem externen Detektor (21),
- Empfangen (S02) von Blickrichtungsinformationen eines Fahrers von einem Blickrichtungsdetektor (22),
- Erzeugen eines visuellen Warnsignals, wenn eine potenziell gefährliche Fahrsituation detektiert wird,
- Auswählen von einem der Vielzahl von Displays des Fahrzeugs in Abhängigkeit von den Blickrichtungsinformationen des Fahrers, und
- Steuern der Anzeige des visuellen Warnsignals auf dem ausgewählten Display des Fahrzeugs,
wobei das Verfahren ferner den Schritt des Bestimmens eines Aufmerksamkeitsstatus des Fahrzeugfahrers, wobei der Aufmerksamkeitsstatus anzeigt, ob sich der Fahrzeugfahrer der detektierten potenziell gefährlichen Fahrsituation bewusst ist oder nicht, und dann des Bestimmens in Abhängigkeit vom Aufmerksamkeitsstatus des Fahrzeugfahrens, ob ein visuelles Warnsignal zu erzeugen ist oder nicht, nachdem bestimmt wurde, dass sich der Fahrer der detektierten potenziell gefährlichen Fahrsituation bewusst ist, umfasst, wobei der Aufmerksamkeitsstatus - das Bewusstsein - des Fahrers für eine gegebene Zeitperiode gültig bleibt.

11. Nichttransitorisches computerlesbares Medium, das Programmanweisungen zum Veranlassen eines Computers, die in Anspruch 10 definierten Schritte des Verfahrens auszuführen, umfasst.

12. Fahrzeug, in dem sich das Fahrzeugwarnsystem nach einem der Ansprüche 1 bis 9 befindet.

## Revendications

1. Système d'alerte de véhicule pour notifier une situation de conduite potentiellement dangereuse à un conducteur, comprenant au moins un détecteur externe (21) qui est adapté pour fournir des informations de détection relatives à une situation de conduite potentiellement dangereuse à l'extérieur du véhicule (100), un détecteur de direction de regard (22) qui est adapté pour fournir des informations de direction de regard du conducteur, une unité d'alerte (23) qui est adaptée pour recevoir les informations de détection et les informations de direction de regard du conducteur, générer un signal d'alerte visuel (30) lorsqu'une situation de conduite potentiellement dangereuse est détectée, et commander l'affichage du signal d'alerte visuel (30) sur un dispositif d'affichage du véhicule, dans lequel le véhicule (100) comprend une pluralité de dispositifs d'affichage (10a-10g), l'unité d'alerte (23) est adaptée pour sélectionner l'un de ladite pluralité de dispositifs d'affichage du véhicule en fonction des informations de direction de regard du conducteur, et commander l'affichage du signal d'alerte visuel (30) sur le dispositif d'affichage sélectionné, et l'unité d'alerte (23, 236) est adaptée pour déterminer un état de conscience du conducteur de véhicule, ledit état de conscience indiquant si le conducteur de véhicule est conscient ou non de la situation de conduite potentiellement dangereuse détectée, et déterminer ensuite s'il faut générer ou non un signal d'alerte visuel en fonction de l'état de conscience du conducteur de véhicule, et après avoir déterminé que le conducteur est conscient de la situation de conduite potentiellement dangereuse détectée, l'état de conscience du conducteur, qui est "conscient", reste valide pendant une période de temps donnée.

2. Système d'alerte de véhicule selon la revendication 1, dans lequel le dispositif d'affichage (10a) sélectionné est situé dans la direction de regard du conducteur de véhicule.

3. Système d'alerte de véhicule selon la revendication 2, dans lequel, en l'absence d'un dispositif d'affichage dans la direction de regard du conducteur de véhicule, le dispositif d'affichage sélectionné est situé le plus près de la direction de regard du conducteur de véhicule.

4. Système d'alerte de véhicule selon l'une des revendications 1 à 3, dans lequel le signal d'alerte visuel comporte une indication visuelle montrant une direction indiquant l'endroit où se trouve la situation de conduite potentiellement dangereuse détectée.

5. Système d'alerte de véhicule selon l'une des revendications 1 à 4, dans lequel le signal d'alerte visuel comporte une flèche montrant une direction indiquant l'endroit où se trouve la situation de conduite potentiellement dangereuse détectée.

6. Système d'alerte de véhicule selon l'une des revendications 1 à 5, dans lequel l'unité d'alerte (23) est adaptée pour sélectionner une succession de dispositifs d'affichage en fonction d'un mouvement dans la direction de regard du conducteur de véhicule, et commander l'affichage du signal d'alerte visuel successivement sur la succession de dispositifs d'affichage sélectionnés.

7. Système d'alerte de véhicule selon l'une des revendications 1 à 6, dans lequel l'unité d'alerte (23, 237) est adaptée pour déterminer s'il faut ou non générer un signal d'alerte visuel, en fonction d'un niveau de criticité de la situation de conduite potentiellement dangereuse détectée.

8. Système d'alerte de véhicule selon la revendication 7, dans lequel le niveau de criticité de la situation de conduite potentiellement dangereuse détectée est inclus dans les informations de détection fournies par l'au moins un détecteur externe (21).

9. Système d'alerte de véhicule selon la revendication 7, dans lequel le niveau de criticité de la situation de conduite potentiellement dangereuse détectée est déterminé par l'unité d'alerte (23) à partir des informations de détection fournies par l'au moins un détecteur externe (21).

10. Procédé de notification d'une situation de conduite potentiellement dangereuse à un conducteur de véhicule, dans lequel le véhicule comprend une pluralité de dispositifs d'affichage, le procédé comprenant les étapes :
- de réception (S01), d'au moins un détecteur externe (21), d'informations de détection relatives à une situation de conduite potentiellement dangereuse,
- de réception (S02), d'un détecteur de direction de regard (22), d'informations de direction de regard du conducteur,
- de génération d'un signal d'alerte visuel lorsqu'une situation de conduite potentiellement dangereuse est détectée,
- de sélection de l'un de ladite pluralité de dispositifs d'affichage du véhicule en fonction des informations de direction de regard du conducteur, et
- de commande de l'affichage du signal d'alerte visuel sur le dispositif d'affichage sélectionné du véhicule,
dans lequel le procédé comprend en outre l'étape de détermination d'un état de conscience du conducteur de véhicule, ledit état de conscience indiquant si le conducteur de véhicule est conscient ou non de la situation de conduite potentiellement dangereuse détectée, et ensuite de détermination précisant s'il faut générer ou non un signal d'alerte visuel en fonction de l'état de conscience du conducteur de véhicule, et après avoir déterminé que le conducteur est conscient de la situation de conduite potentiellement dangereuse détectée, l'état de conscience du conducteur, qui est "conscient", reste valide pendant une période de temps donnée.

11. Support non transitoire lisible par ordinateur comprenant des instructions de programme pour amener un ordinateur à exécuter les étapes du procédé défini dans la revendication 10.

12. Véhicule intégrant le système d'alerte de véhicule selon l'une des revendications 1 à 9.
